# FASCICULE DE BREVET EUROPEEN

(11) **EP 0 670 625 B1**
(45) Date de publication et mention de la délivrance du brevet: **10.09.1997**
(21) Numéro de dépôt: 95400359.6
(22) Date de dépôt: 21.02.1995
(51) Int. Cl.: H02M 7/5395

(54) **Système de commande d'un onduleur à MLI**
Steuersystem für einen pulsbreitenmodulierten Wechselrichter
Control system for a PWM inverter

(30) Priorité: 01.03.1994 FR 9402428
(43) Date de publication de la demande: 06.09.1995
(73) Titulaire: SCHNEIDER ELECTRIC SA, 92100 Boulogne Billancourt (FR)
(72) Inventeur: Nguyen Phuoc, Vinh, F-92100 Boulogne Billancourt (FR); Garces, Luis, F-78230 Le Pecq (FR)
(74) Mandataire: Saint Martin, René

(56) Documents cités:
- PATENT ABSTRACTS OF JAPAN vol. 13 no. 390 (E-813) ,29 Août 1989 & JP-A-01 136572 (TOYO ELECTRIC) 29 Mai 1989,
- PATENT ABSTRACTS OF JAPAN vol. 12 no. 412 (E-676) ,31 Octobre 1988 & JP-A-63 148894 (MITSUBISHI) 21 Juin 1988,
- CONF. REC. OF THE 1989 IEEE INDUSTRY APPLICATIONS SOCIETY ANNUAL MEETING, SAN DIEGO, CALIFORNIA, page 760 SALMON 'Slope modulation in inverter circuits'

## Description

La présente invention concerne un dispositif de commande d'un onduleur polyphasé relié à une source d'alimentation par l'intermédiaire d'un circuit de tension continue et piloté en modulation de largeur d'impulsions par un circuit de commande, comprenant un pont composé de plusieurs couples d'interrupteurs statiques disposés en parallèle à des diodes respectives de roue libre, le point milieu de chaque couple étant relié à une charge; le découpage est réalisé par comparaison dans le circuit de commande d'un signal d'entrée et d'une onde porteuse triangulaire.

Le rôle d'un onduleur est de créer une alimentation, par exemple triphasée, à tension et fréquence variables à partir d'une tension continue. L'onduleur découpe la tension continue et délivre des tensions qui contiennent des composantes fondamentales, déphasées de façon à constituer l'alimentation équilibrée triphasée qui peut alimenter une charge, par exemple un moteur.

Le système de découpage habituellement utilisé, qu'on définira comme découpage standard, utilise une fréquence de découpage fixe. Il consiste, en choisissant une période de découpage, à définir les instants de commutation des couples d'interrupteurs du pont onduleur, par comparaison d'un signal d'entrée et d'une onde porteuse dont la fréquence est égale à la fréquence de découpage.

Cependant ce découpage génère du bruit, qui se traduit par l'apparition de raies de fréquence aux multiples de la fréquence de découpage.

Ainsi une haute fréquence de découpage, considérée au-delà de la plage des fréquences audibles, entraîne des pertes de commutation importantes.

A basse fréquence de découpage, sur la plage des fréquences audibles, le bruit peut simplement être gênant à l'oreille humaine.

Afin de réduire le bruit, il est connu d'étaler dans le domaine spectral les raies de fréquence qui apparaissent aux multiples de la fréquence de découpage.

A cet effet, on utilise généralement un système à fréquence de découpage aléatoire. La fréquence est tirée de façon aléatoire dans une bande de fréquence donnée. Ce système à fréquence de découpage aléatoire conduit, si la forme de l'onde porteuse est triangulaire, à obtenir des triangles de période variable. Ce système convient bien pour les moyennes fréquences de découpage.

En revanche, à basse fréquence, ce système à fréquence de découpage aléatoire est difficilement applicable. En effet la bande de fréquence est étroite et le nombre de fréquences à tirer aléatoirement est donc plus réduit.

L'invention propose par conséquent un dispositif de commande de l'onduleur permettant de réduire le bruit généré par le découpage, notamment à basse fréquence. Le dispositif utilise une fréquence de découpage constante et un paramètre, autre que la fréquence de l'onde porteuse, choisi aléatoirement de façon, après découpage, à obtenir entre les phases et le neutre de la charge les tensions simples de consigne que l'on veut imposer à cette charge.

Selon un mode de réalisation, les pentes des côtés de chaque triangle de l'onde porteuse triangulaire sont asymétriques et choisies de façon que chaque triangle s'inscrive dans la période constante T de découpage de l'onduleur.

Selon une caractéristique, le signal d'entrée du circuit de commande est égal aux tensions simples de consigne.

Selon un autre mode de réalisation, les pentes des triangles de l'onde porteuse sont symétriques et la tension prise entre le neutre de la charge et un point du circuit de tension continue est déplacée de façon aléatoire. Ainsi le signal d'entrée du circuit de commande est égal aux tensions simples de consigne auxquelles est ajoutée respectivement une valeur V_{NO} variable de manière aléatoire, choisie de façon que chaque tension du signal d'entrée soit inférieure à la moitié de la tension du circuit de tension continue.

La description faite ci-après en regard des dessins fera ressortir les caractéristiques et avantages de l'invention. Aux dessins annexés :
- la figure 1 est le schéma d'un onduleur conforme à l'invention ;
- les figures 2a et 2b montrent pour deux périodes d'échantillonnage les formes de l'onde porteuse selon le mode de réalisation choisi;
- la figure 3 montre le spectre de la tension composée entre deux phases d'un moteur pour un découpage stantard de 3,92 kHz ;
- la figure 4 montre le spectre de la tension composée entre deux phases du moteur à une fréquence fixe de 3,92 kHz selon un premier mode de réalisation ;
- la figure 5 montre le spectre de la tension composée entre deux phases du moteur pour un découpage standard à 1.96 kHz ;
- la figure 6 montre le spectre de la tension composée entre deux phases du moteur selon un second mode de réalisation à une fréquence fixe de 1.96 kHz ;

L'onduleur selon l'invention, repéré 10, est relié, par l'intermédiaire d'un circuit 11 de tension continue muni de deux condensateurs 12 et 13, à un pont redresseur 14 relié aux conducteurs de phase d'un réseau triphasé. L'onduleur est relié côté sortie aux conducteurs de phase A,B,C d'une charge telle qu'un moteur asynchrone M par exemple.

L'onduleur comprend six interrupteurs statiques commandés, constitués par trois couples d'interrupteurs à semiconducteur T1,T6 en parallèle auxquels sont disposées des diodes respectives D1,D6 de roue libre. Chaque couple d'interrupteurs comporte deux transistors cascadés T1,T4 ; T3,T6 ; T5,T2 dont l'un T1,T3,T5 est dit de voie haute et l'autre T4,T6,T2 dit de voie basse. Le point milieu de chaque couple est connecté à un enroulement de phase respectif du moteur. Un circuit de commande 20 permet de rendre passants et bloquants les interrupteurs T1 à T6 aux instants choisis.

Le circuit de commande 20 est par exemple un composant de type ASIC. Il comprend un générateur 21 d'onde triangulaire Vₚ et des comparateurs 20a, 20b, 20c qui reçoivent, d'une part, l'onde porteuse Vₚ , et d'autre part des tensions d'entrées V₁, V₂ et V₃. Les valeurs des tensions V₁, V₂ et V₃, ainsi que la forme de l'onde porteuse triangulaire sont choisis en fonction du mode de réalisation de réduction de bruit applicable.

Le premier mode de réalisation de l'invention utilise un générateur d'onde porteuse à pentes aléatoires, pour une fréquence de découpage fixe T.

Une mémoire 22 stocke des tables de pentes de triangles disponibles en fonction de la fréquence de découpage fixe utilisée et de la valeur de la tension E du circuit de tension continue choisie.

Un tirage aléatoire de la pente α₁ de l'un des côtés de chaque triangle est réalisé par des moyens logiciels, et communiqué au générateur d'onde 21.

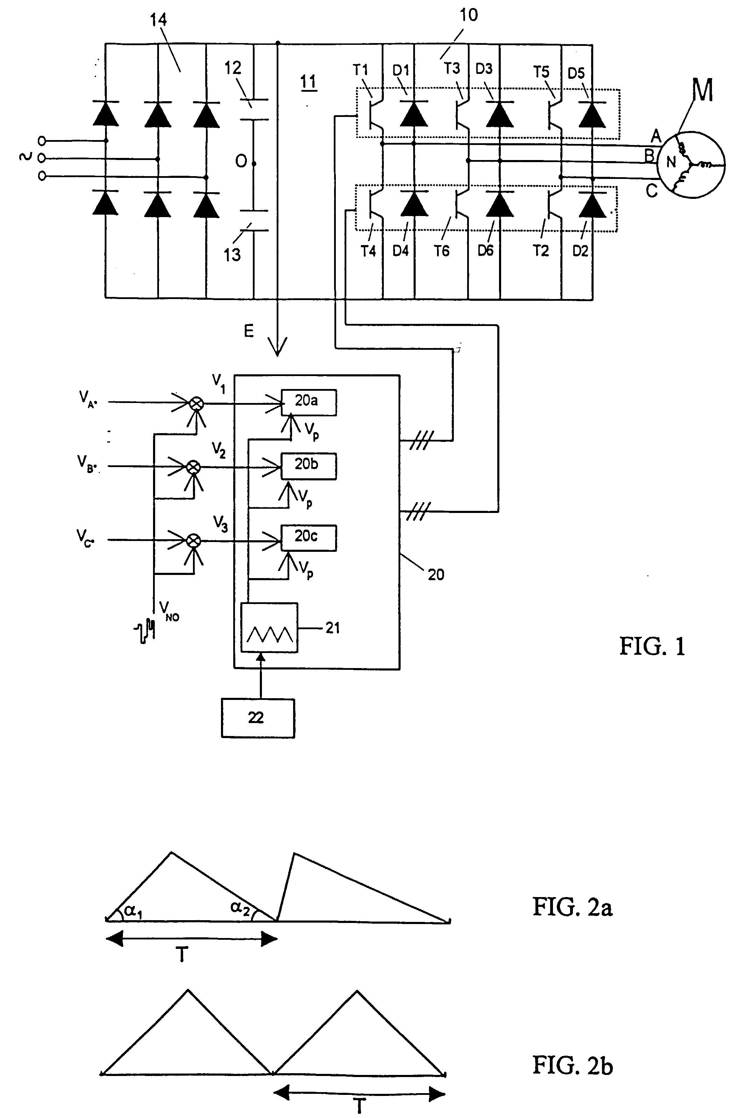

Le générateur 21 crée l'onde porteuse en choisissant la pente α₂ de l'autre côté des triangles de façon que chaque triangle s'inscrive dans la période constante de découpage T de l'onduleur. L'onde porteuse Vₚ contient donc un seul triangle par période de découpage et les pentes de chaque triangle sont asymétriques (figure 2a).

Le principe de découpage reste inchangé, les comparateurs 20a, 20b, 20c comparent chaque tension d'entrée imposée V₁, V₂ et V₃ avec l'onde porteuse Vₚ, puis le circuit 20 commande les interrupteurs en fonction du résultat de la comparaison.

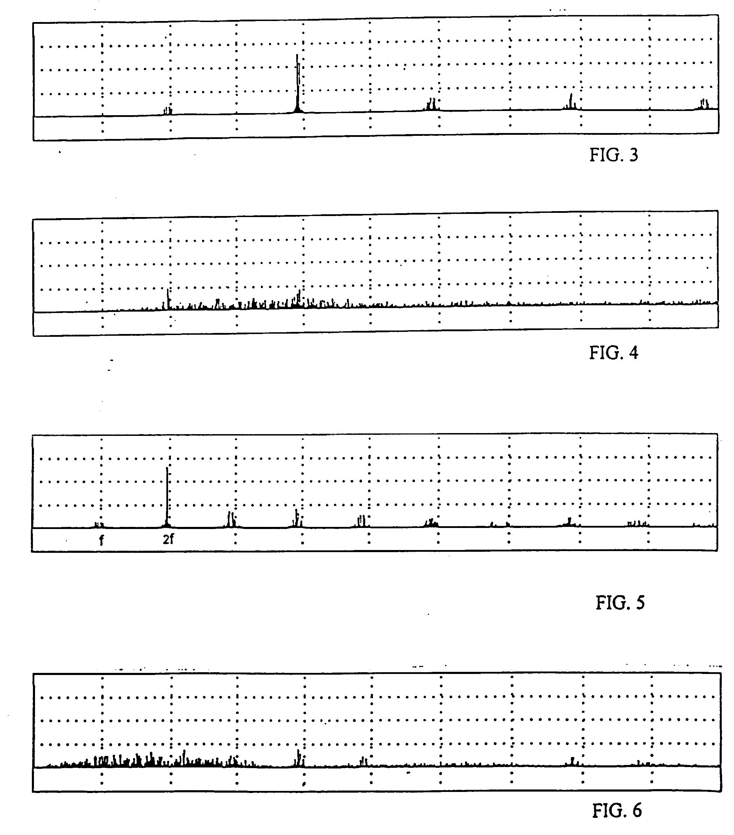

Un exemple de spectre obtenu par découpage standard est donné à la figure 3. La fréquence est fixe (3,92 kHz), les pentes des triangles de l'onde porteuse sont symétriques, et les tensions de commande V₁, V₂, et V₃ imposées à l'entrée du circuit de commande sont égales aux tensions simples de consigne V_{A}*, V_{B}* et V_{C}*, tensions que l'on veut obtenir sur le moteur entre les phases et le neutre.

La figure 4 montre l'usage du premier mode de réalisation pour la même fréquence de découpage de 3,92 kHz et les mêmes tensions de commande V₁, V₂, et V₃ . Le spectre obtenu indique un bon étalement par rapport à celui du découpage standard en figure 3.

Le second mode de réalisation de l'invention utilise le déplacement aléatoire du neutre du moteur par rapport au point milieu O du circuit de tension continue avec une fréquence de découpage fixe.

Ce mode est illustré à basse fréquence sur la figure 6, les impératifs de découpage et de mesure de courant exige que le triangle reste symétrique. C'est pourquoi ce mode de réalisation consiste, en gardant la fréquence de découpage fixe et les pentes des triangles symétriques comme illustré sur la figure 2b, à déplacer la tension prise entre le neutre du moteur et le point milieu O du circuit de tension continue de valeur E.

Ce déplacement consiste à ajouter aux trois tensions simples de consigne V_{A}* , V_{B}* et V_{C}* une même valeur V_{N0}, une ou deux fois par période, pour obtenir les valeurs d'entrée V₁, V₂, V₃ du circuit de commande 20.

Ce déplacement ne peut être fait que si chaque tension imposée V₁, V₂ et V₃ est inférieure à E/2, on risque sinon de dépasser la zone de linéarité de l'onduleur.

La figure 5 illustre un spectre obtenu par découpage standard. L'onde est de fréquence fixe (f=1,96 kHz), chaque triangle reste symétrique, et les tensions V₁, V₂ et V₃ sont égales aux tensions simples de consigne V_{A}* , V_{B}* et V_{C}*. On voit apparaître une raie au double de la fréquence (2f).

La figure 6 illustre un spectre selon le second mode de réalisation pour une fréquence de découpage de 1,96 kHz. Cette figure montre un étalement correct du spectre et surtout l'absence de raie au double de la fréquence, en comparaison avec le découpage standard à la figure 5.

## Revendications

1. Dispositif de commande d'un onduleur polyphasé (10) relié à une source d'alimentation par l'intermédiaire d'un circuit de tension continue (11) et piloté en modulation de largeur d'impulsions par un circuit de commande (20), comprenant plusieurs couples d'interrupteurs statiques (T1-T6) disposés en parallèle à des diodes respectives de roue libre (D1-D6), le point milieu de chaque couple étant relié à une charge; le découpage est réalisé par comparaison dans le circuit de commande d'un signal d'entrée défini par des tensions de commande (V₁,V₂,V₃) qui sont fonction de tensions simples de consigne (V_{A}*, V_{B}* et V_{C}* ), et d'une onde porteuse triangulaire fournie par un générateur d'onde triangulaire, caractérisé en ce qu'il utilise une fréquence de découpage constante et un paramètre, autre que la fréquence de l'onde porteuse, dont la valeur varie aléatoirement de façon à obtenir entre les phases et le neutre de la charge, après découpage, les tensions simples de consigne (V_{A}*, V_{B}* et V_{C}*).

2. Dispositif selon la revendication 1, caractérisé en ce que les pentes des côtés de chaque triangle de l'onde porteuse triangulaire sont asymétriques.

3. Dispositif selon la revendication 2, caractérisé en ce que l'une des pentes (α₁) des triangles est choisie de manière aléatoire, et l'autre pente (α₂) est choisie de façon que le triangle s'inscrive dans la période constante (T) de découpage de l'onduleur.

4. Dispositif selon la revendication 1, caractérisé en ce que les tensions d'entrée du circuit de commande (V₁,V₂,V₃) sont égales aux tensions simples de consigne (V_{A}*, V_{B}* et V_{C}* ).

5. Dispositif selon la revendication 1, caractérisé en ce que les pentes des triangles de l'onde porteuse sont symétriques et la tension prise entre le neutre de la charge et un point du circuit de tension continue varie de façon aléatoire.

6. Dispositif selon la revendication 1, caractérisé en ce que les tensions d'entrée du circuit de commande (V₁,V₂,V₃) sont égales aux tensions simples de consigne (V_{A}*, V_{B}* et V_{C}* ) auxquelles est ajoutée respectivement une valeur (V_{NO}) variable de manière aléatoire.

7. Dispositif selon la revendication 6, caractérisé en ce que la valeur aléatoire V_{NO} est choisie de façon que chaque tension d'entrée du circuit de commande (V₁,V₂,V₃) soit inférieure à E/2, où E est la tension du circuit de tension continue.

## Patentansprüche

1. Steuervorrichtung für einen mehrphasigen Wechselrichter (10), die über einen Gleichspannungskreis (11) an eine Versorgungsquelle angeschlossen ist und deren Pulsweitenmodulation von einem Steuerkreis (20) gesteuert wird, mit mehreren statischen Schalterpaaren (T1-T6), die parallel zu jeweiligen Freilaufdioden (D1-D6) angeordnet sind, wobei der Mittelpunkt eines jeden Paars an eine Last angeschlossen ist; die Zerlegung erfolgt durch Vergleich eines von den Steuerspannungen (V₁, V₂, V₃), die Funktion der einfachen Sollspannungen (V_{A*}, V_{B*} und V_{C*}) sind, definierten Eingangssignals und einer dreieckigen Trägerwelle, die von einem Dreieckwellengenerator erzeugt wird, dadurch gekennzeichnet, daß sie eine konstante Pendelfrequenz und einen anderen Parameter als die Frequenz der Trägerwelle verwendet, dessen Wert zufällig schwankt, so daß man nach dem Zerlegen zwischen den Phasen und dem Nulleiter der Last die einfachen Sollspannungen (V_{A*}, V_{B*} und V_{C*}) erhält.

2. Vorrichtung nach Anspruch 1, dadurch gekennzeichnet, daß die Schrägen der Seiten eines jeden Dreiecks der Trägerwelle asymmetrisch sind.

3. Vorrichtung nach Anspruch 2, dadurch gekennzeichnet, daß eine der Schrägen (α₁) der Dreiecke zufällig gewählt wird und die andere Schräge (α₂) so, daß sich das Dreieck in der konstanten Zerlegungsperiode (T) des Wechselrichters befindet.

4. Vorrichtung nach Anspruch 1, dadurch gekennzeichnet, daß die Eingangsspannungen des Steuerkreises (V₁, V₂, V₃) den einfachen Sollspannungen (V_{A*}, V_{B*} und V_{C*}) entsprechen.

5. Vorrichtung nach Anspruch 1, dadurch gekennzeichnet, daß die Schrägen der Dreiecke der Trägerwelle symmetrisch sind und die zwischen dem Nulleiter der Last und einem Punkt des Gleichspannungskreises abgegriffene Spannung zufällig schwankt.

6. Vorrichtung nach Anspruch 1, dadurch gekennzeichnet, daß die Eingangsspannungen des Steuerkreises (V₁, V₂, V₃) den einfachen Sollspannungen (V_{A*}, V_{B*} und V_{C*}) entsprechen, denen jeweils ein zufällig variabler Wert (V_{NO}) hinzugefügt wird.

7. Vorrichtung nach Anspruch 6, dadurch gekennzeichnet, daß der zufällige Wert V_{NO} so gewählt wird, daß jede Eingangsspannung des Steuerkreises (V₁, V₂, V₃) niedriger ist als E/2, wobei E die Spannung des Gleichspannungskreises ist.

## Claims

1. Control device for a multi-phase UPS (10) connected to a power supply source through a DC circuit (11) and controlled in pulse width modulation by a control circuit (20), including several pairs of static switches (T1-T6) installed in parallel with free wheel diodes (D1-D6), the mid-point of each pair being connected to a load; switching is done by comparison in this control circuit between an input signal defined by control voltages (V₁, V₂ and V₃) that are a function of the simple voltage set values (V_{A*} V_{B*}, V_{C*}) and a triangular carrier wave output by a triangular wave generator that uses a constant switching frequency and a parameter other than the frequency of the carrier wave, the value of which varies in a random manner in order to obtain after switching the simple voltage set values (V_{A*} V_{B*}, V_{C*}) between the phases and the neutral of the load.

2. Device according to claim 1, wherein the slopes of the sides of each triangle of the triangular carrier wave are asymmetric.

3. Device according to claim 2, wherein one of the slopes (α₁) of the triangle is chosen at random, and the other slope (α₂) is chosen such that the triangle is inscribed within the constant switching period (T) of the UPS.

4. Device according to claim 1, wherein the control circuit input voltages (V_{1,} V₂ and V₃) are equal to the simple voltage set values (V_{A*} V_{B*}, V_{C*}).

5. Device according to claim 1, wherein the slopes of the carrier wave triangles are symmetrical and the voltage taken between the neutral of the load and a point on the DC circuit varies at random.

6. Device according to claim 1, wherein the control circuit input voltages (V_{1,} V₂ and V₃) are equal to the simple voltage set values (V_{A*} V_{B*}, V_{C*}), plus a random varying value (V_{NO}).

7. Device according to claim 6, wherein the random value V_{NO} is chosen such that each control circuit input voltage (V_{1,} V₂ and V₃) is less than E/2, where E is the voltage in the DC circuit.
